# EUROPÄISCHE PATENTSCHRIFT

(11) **EP 1 569 845 B1**
(45) Veröffentlichungstag und Bekanntmachung des Hinweises auf die Patenterteilung: **03.05.2006**
(21) Anmeldenummer: 03780124.8
(22) Anmeldetag: 05.12.2003
(51) Int. Cl.: B64C 1/14

(54) **LUFTFAHRZEUG-TÜRANORDNUNG**
AIRCRAFT DOOR ARRANGEMENT
SYSTEME DE PORTE D'AERONEF

(30) Priorität: 11.12.2002 DE 10258105
(43) Veröffentlichungstag der Anmeldung: 07.09.2005
(73) Patentinhaber: EUROCOPTER DEUTSCHLAND GmbH, 86609 Donauwörth (DE)
(72) Erfinder: WIERS, Andreas, 86609 Donauwörth (DE); SUCHY, Rainer, 86609 Donauwörth (DE); KUNZE, Steffen, 83620 Feldkirchen-Westerham (DE); STERR, Matthias, 86150 Augsburg (DE)
(74) Vertreter: Duschek, Horst Jürgen
(86) Internationale Anmeldenummer: PCT/EP2003/013752
(87) Internationale Veröffentlichungsnummer: WO 2004/052723

(56) Entgegenhaltungen:
- EP-A- 0 518 429
- DE-A- 10 207 033
- DE-C- 19 702 083

## Beschreibung

### TECHNISCHES GEBIET

Die vorliegende Erfindung betrifft eine Luftfahrzeug-Türanordnung, insbesondere für ein Flugzeug, und wiederum insbesondere für ein Flugzeug mit Druckkabine.

### STAND DER TECHNIK

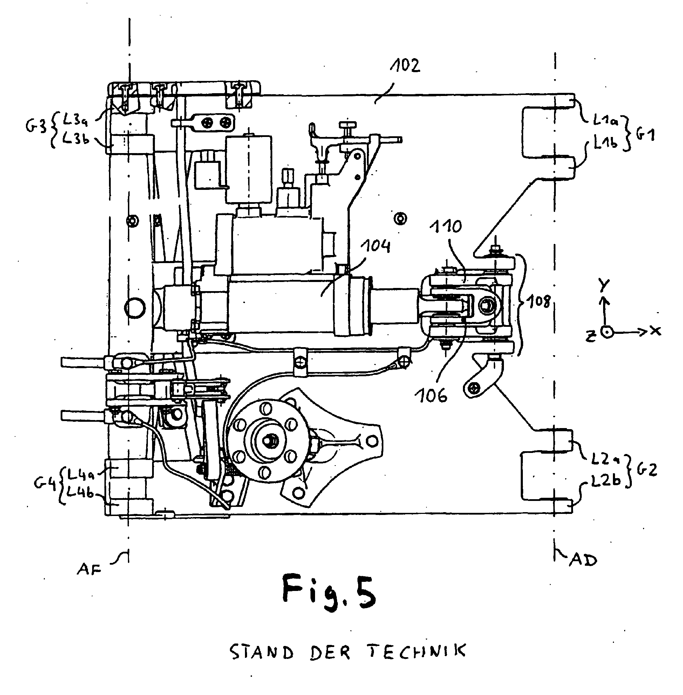

Aus diversen, bereits seit längerem im Betrieb befindlichen Luftfahrzeugtypen ist eine Luftfahrzeug-Türanordnung bekannt, die eine Tür, einen Türrahmen, und einen Traglenker 102 umfasst, wie er in Fig. 5 dargestellt ist. Dieser Traglenker 102 besitzt eine türseitige Schwenkachse AD, an der die Tür schwenkbar gelagert ist, und eine rahmenseitige Schwenkachse AF, an welcher der Traglenker 102 schwenkbar am Türrahmen gelagert ist. Die türseitige Schwenkachse AD ist durch zwei in Höhenrichtung Y des Traglenkers voneinander beabstandete Gelenke G1, G2 definiert ist, die jeweils zwei in Höhenrichtung Y voneinander beabstandete gabelförmige Lagerstellen L1a, L1b, L2a, L2b besitzen, die jeweils durch zwei Augterminals gebildet sind. Die Türanordnung besitzt einen Schwenkantrieb 104 zum Verschwenken der Tür. Der Schwenkantrieb 104 ist als ein seitlich am Traglenker 102 angeordneter Linearaktuator ausgestaltet, der sich im wesentlichen über die gesamte Breite des Traglenkers 102 erstreckt. Der Aktuator 104 ist mit seiner in der Zeichnung linken Seite am Traglenker 102 und mit seiner rechten Seite an einem beweglichen Abtriebselement 106 befestigt. Das Abtriebselement 106 wiederum ist mit der Tür gekoppelt und überträgt eine Stellbewegung des Aktuators 104 auf die Tür. Wie in der Zeichnung zu erkennen ist, benötigt diese Bauweise eine separate Lagerung 108 für das Abtriebselement 106, einen Zwischenhebel 110 und eine Vielzahl von weiteren Bauteilen, was das Gewicht der gesamten Türkonstruktion nachteilig erhöht. Auch ist die erforderliche Bautiefe des Traglenkers 102 aufgrund des seitlich angebrachten Linearaktuators 104 recht groß. Ferner ergeben sich dadurch lange Lastwege. Aufgrund der beschriebenen Bauweise wird der Traglenker 102 durch die Reaktionskräfte des Aktuators 104 auch relativ hoch belastet. Die auftretenden Kräfte müssen daher durch entsprechend kräftiger dimensionierte Bauteilbereiche aufgefangen werden, was wiederum zu einer Gewichtserhöhung führt. Diese vorbekannte Luftfahrzeug-Türanordnung ist recht komplex und aufwendig.

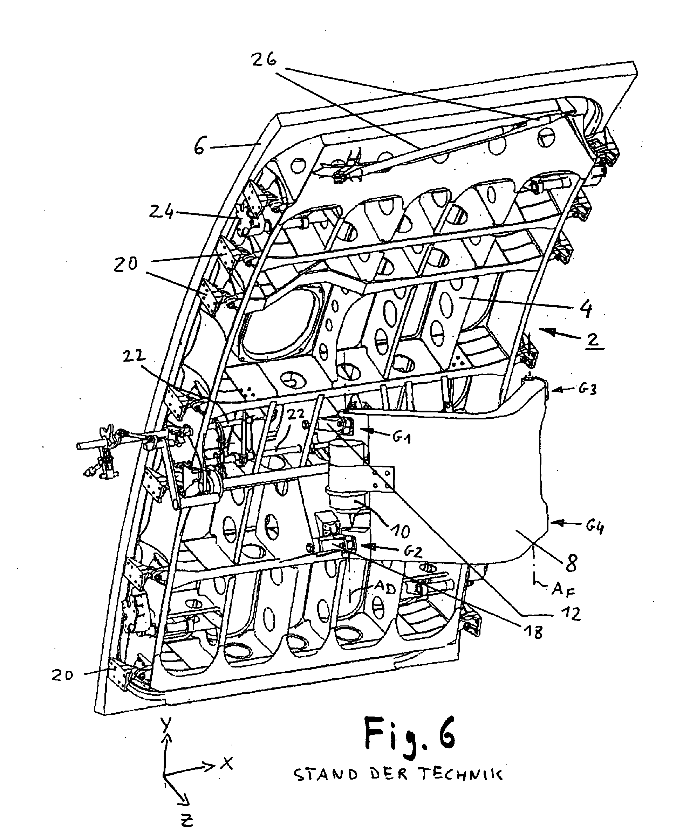

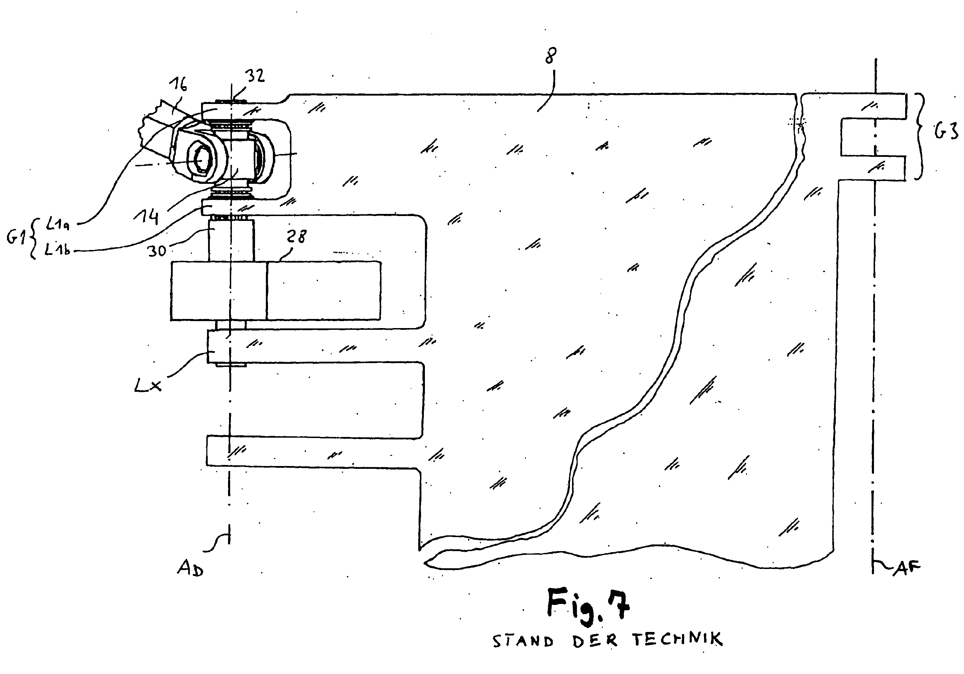

Aus der nicht vorveröffentlichten DE-10207033 der Anmelderin ist eine Luftfahrzeug-Türanordnung für ein Flugzeug bekannt, wie sie in der Fig. 6 dargestellt ist. Entsprechend dem Oberbegriff des Anspruchs 1 umfasst diese Luftfahrzeug-Türanordnung: eine Tür 2; eine Türstruktur 4, einen Türrahmen 6; einen Traglenker 8 mit einer türseitigen Schwenkachse AD, an der die Tür 2 schwenkbar gelagert ist, und einer rahmenseitigen Schwenkachse AF, an welcher der Traglenker 8 schwenkbar am Türrahmen 6 gelagert ist, wobei zumindest die türseitige Schwenkachse AD durch zwei in Höhenrichtung Y des Traglenkers 8 voneinander beabstandete Gelenke G1, G2 definiert ist, von denen mindestens eines zwei in Höhenrichtung Y voneinander beabstandete Lagerstellen besitzt (siehe insb. Fig. 7); einen am türseitigen Bereich des Traglenkers 8 angeordneten Schwenkantrieb 10 zum Verschwenken der Tür 2; und ein Abtriebselement 12, welches mit dem Schwenkantrieb 10 und der Tür 2 gekoppelt ist und eine Stellbewegung des Schwenkantriebs 10 auf die Tür 2 überträgt. Das Abtriebselement 12 umfasst auf Seiten des Traglenkers 8 ein im Bereich des oberen türseitigen Gelenks G1 angeordnetes Kreuzgelenk 14 und einen daran befestigten oberen Dreieckslenker 16, der sich zur Tür 2 hin erstreckt. Am unteren türseitigen Gelenk G2 ist ebenfalls ein Kreuzgelenk und ein unterer Dreieckslenker 18 vorgesehen. Diese beiden letztgenannten Teile sind jedoch nicht angetrieben.

Im verriegelten Zustand ist die Tür über Verriegelungselemente im Türrahmen 6 verriegelt und über radiale, d.h. seitliche Anlagebeschläge 20, welche der seitlichen Führung dienen und sowohl an der Tür 2 als auch dem Türrahmen 6 vorhanden sind, seitlich abgestützt.

Eine Türkinematik legt die beim Öffnen und Schließen der Tür 2 auftretenden relativen Bewegungen der Tür 2 bezüglich der Türrahmen- bzw. Rumpfstruktur des Luftfahrzeugs fest. Bei einer der DE-10207033 entsprechenden Türanordnung sind in der Türkinematik üblicherweise zwei voneinander entkoppelte Antriebsstränge vorgesehen, nämlich eine Anhebekinematik und eine Schwenkkinematik.

Die Anhebekinematik wird in einer Öffnungsphase der Tür 2 zum Anheben der Tür 2 und zum Ablösen der radialen Anlagebeschläge 20 voneinander benötigt. Sie umfasst u.a. auch verschiedenen Wellen 22, die z.B. durch einen Handhebel manuell ansteuerbar sind. Durch Verdrehen der Wellen 22 wird eine durch das Parallelogramm "Tür 2 - oberer Dreieckslenker 16 - Traglenker 8 - unterer Dreieckslenker 18 - Tür 2" erzeugte Relativbewegung zwischen Traglenker 8 und den Dreieckslenkern 16, 18 erzwungen, die ein Anheben der Tür 2 sicherstellt. Während des Anhebens wird die Tür 2 in sogenannten Führungskulissen 24 rumpfseitig definiert geführt. In einer Schließphase der Tür 2 fungiert die Anhebekinematik analog in umgekehrter Richtung als Absenkkinematik. Die Schwenkkinematik hat die Aufgabe, nach erfolgtem Anheben der Tür 2 dieselbe zur Seite zu schwenken. Die Schwenkkinematik wird über den Schwenkantrieb 10 (hier: ein elektrischer Aktuator) betätigt. Das Aufschwenken der Tür 2 wird über das Parallelogramm "Tür 2 - Dreieckslenker 16, 18 - Traglenker 8 - Türrahmenstruktur 6 - Steuerlenker 26 - Tür 2" sichergestellt und beginnt mit der Einleitung eines Drehmoments vom Aktuator 10 auf den Traglenker 8. In einer Schließphase der Tür 2 erfolgt ein Zuschwenken der Tür 2 analog in umgekehrter Richtung.

In der Fig. 7, die einen dritten, nicht vorveröffentlichten Stand der Technik darstellt, ist in einer vergrößerten Darstellung ein Teilbereich eines Traglenkers 8 im Bereich eines türseitigen, oberen Gelenks G1 gezeigt. Der Traglenker 8 ist ähnlich wie der Traglenker der Fig. 6 aufgebaut. Deutlich sind in der Fig. 7 die zwei in Höhenrichtung voneinander beabstandeten Lagerstellen L1a, L1b zu erkennen, die durch zwei Augterminals gebildet sind, die einen gabelförmigen Gelenkanschluss formen. Zwischen den zwei Augterminals ist das Abtriebselement 12 (hier: Kreuzgelenk 14 mit oberem Dreieckslenker 16) angeordnet. Unterhalb dem Gelenk G1 greift ein Kraftübertragungsmittel 28 des Schwenkantriebs (nicht dargestellt) an. Das Kraftübertragungsmittel 28 ist über eine Welle 30 axial und drehfest mit einem als Gelenkzapfen dienenden Gelenkstift 32 des Kreuzgelenks 14 verbunden. Das Kraftübertragungsmittel 28 bzw. dessen Welle 30 muss, wie in der Zeichnung zu erkennen, zusätzlich zur Lagerstelle L1b, welche es mitbenutzt, über mindestens eine weitere Lagerstelle Lx gelagert und gehalten sein. Dies führt aufgrund der Viehzahl der erforderlichen Lagerstellen L1a, L1b, Lx und Höhe des für das Kraftübertragungsmittel 28 bzw. dessen Welle 30 erforderlichen Bauraums zu einer großen Bauhöhe des Traglenkers 8, zu einer komplexen Anordnung des Schwenkantriebs mit einer Vielzahl von für den Schwenkantrieb erforderlichen Befestigungspunkten. Ferner wird gleichzeitig die Montage bzw. Demontage des Schwenkantriebs erschwert. Darüber hinaus können bei einer derartigen Anordnung Fluchtungsfehler des Schwenkantriebs und weiterer im Kraft- oder Momentenübertragungspfad des Schwenkantriebs liegender benachbarter Komponenten nicht oder nur sehr schwer, d.h. unter Zwischenschaltung separater Ausgleichseinrichtungen, kompensiert werden. Daraus resultiert nicht nur ein komplexer Aufbau, sondern auch ein erhöhtes Gewicht der Türkonstruktion und eine Beeinträchtigung der Funktion und Lebensdauer des Schwenkantriebs.

Eine Luftfahrzeug-Türanordnung, die der Luftfahrzeug-Türanordnung gemäß dem Oberbegriff des Anspruchs 1 ähnelt , ist aus der DE-197 02 083 C1 bekannt. Anders als die Luftfahrzeug-Türanordnung gemäß dem Oberbegriff des Anspruchs 1 weist diese Luftfährzeug-Türanordnung der DE-197 02 083 C1 jedoch keinen Schwenkantrieb auf, der am türseitigen Bereich des Traglenkers angeordnet ist. Bei der DE-197 02 083 C1 ist der Schwenkantrieb vielmehr direkt am Tragarm und an dessen türrahmenseitigen Bereich positioniert.

Luftfahrzeug-Türanordnungen besitzen darüber hinaus allgemein das Problem, dass die Türen durch äußere Lasten, d.h. zum Beispiel Windlasten, ein Blockieren der Tür, oder dergleichen, hoch beansprucht sind. Diese äußeren Lasten beanspruchen insbesondere auch die türseitigen Lagerstellen des Traglenkers, deformieren den Traglenker und führen zu nicht unerheblichen Belastungen, Verspannungen und Zwängungen des Schwenkantriebs, insbesondere dessen Abtrieb, was sich ebenfalls nachteilig auf die Funktion und Lebensdauer des Schwenkantriebs auswirkt. Bei vorbekannten Luftfahrzeug-Türanordnungen ist im Falle einer Beschädigung oder eines Verschleißes der Türbefestigungselemente des Traglenkers oder der Lagerstellen des Schwenkantriebs eine Reparatur des Traglenkers kaum möglich. Es muss daher in der Regel der gesamte Traglenker ausgetauscht werden, was die Reparatur- bzw. Wartungskosten erhöht.

### DARSTELLUNG DER ERFINDUNG

Der Erfindung liegt die Aufgabe beziehungsweise das technische Problem zugrunde, eine einfache und effektive Luftfahrzeug-Türanordnung zu schaffen, welche die dem Stand der Technik anhaftenden, oben geschilderten Nachteile möglichst weitgehend vermeidet.

Diese Aufgabe wird gelöst durch eine Türanordnung mit den Merkmalen des Anspruchs 1.

Diese erfindungsgemäße Luftfahrzeug-Türanordnung, insbesondere für ein Flugzeug, umfasst: eine Tür; einen Türrahmen; einen Traglenker mit einer türseitigen Schwenkachse, an der die Tür schwenkbar gelagert ist, und einer rahmenseitigen Schwenkachse, an welcher der Traglenker schwenkbar am Türrahmen gelagert ist, wobei zumindest die türseitige Schwenkachse durch zwei in Höhenrichtung des Traglenkers voneinander beabstandete Gelenke definiert ist, von denen mindestens eines zwei in Höhenrichtung voneinander beabstandete Lagerstellen besitzt; einen am türseitigen Bereich des Traglenkers angeordneten Schwenkantrieb zum Verschwenken der Tür; und ein Abtriebselement, welches mit dem Schwenkantrieb und der Tür gekoppelt ist und eine Stellbewegung des Schwenkantriebs auf die Tür überträgt. Die erfindungsgemäße Luftfahrzeug-Türanordnung ist dadurch gekennzeichnet, dass eine der zwei Lagerstellen von mindestens einem der rahmenseitigen Gelenke (oder auch von beiden Gelenken) als ein Schwenkantrieb-Lagerbeschlag ausgebildet ist, an dem der Schwenkantrieb befestigt ist.

Mit anderen Worten, die eine Lagerstelle ist durch den Schwenkantrieb-Lagerbeschlag ersetzt worden. Und das betreffende Gelenk wird nunmehr durch den Schwenkantrieb-Lagerbeschlag (bzw. durch an diesem Beschlag befestigte Komponenten) und die jeweils andere Lagerstelle dieses Gelenks gebildet. Der Schwenkantrieb kann dadurch an nur einer einzigen Stelle, nämlich an dem Schwenkantrieb-Lagerbeschlag, befestigt und gelagert und damit in unmittelbarer Nähe eines Gelenkes und des Abtriebselements angeordnet werden. Daraus ergeben sich kurze und eindeutige Lastwege bzw. Lastflüsse. Der Schwenkantrieb-Lagerbeschlag, der gleichzeitig auch die Lagerung und Befestigung des Schwenkantriebs sicherstellt, leitet die im Betrieb auftretenden Reaktionskräfte des Schwenkantriebs deshalb auf mechanisch sehr günstige Art und Weise in den Traglenker ein.

Darüber hinaus wird eine einfache, lösbare Befestigung des Schwenkantriebs am Schwenkantrieb-Lagerbeschlag (z.B. durch Passstifte, Passbolzen oder dergleichen) ermöglicht. Die direkte Befestigung bzw. Aufhängung des Schwenkantriebs am Schwenkantrieb-Lagerbeschlag, der gewissermaßen selbst eine Lagerstelle bildet, und damit in unmittelbarere Nähe einer Gelenkstelle gestattet auch ein einfaches und effektives Ausrichten des Schwenkantriebs und damit den einfachen Ausgleich von Fluchtungsfehlern ohne zusätzliche, aufwendige und schwergewichtige Ausgleichseinrichtungen. Das Ausrichten bzw. Zentrieren des Schwenkantriebs, insbesondere seines Abtriebs, kann direkt am Schwenkantrieb-Lagerbeschlag erfolgen.

Infolge der Anbindung des Schwenkantriebs in unmittelbarer Nähe eines Gelenks bzw. einer Lagerstelle dieses Gelenks, treten bei einer äußeren Belastung der Tür und der türseitigen Lagerstellen des Traglenkers keine Verspannungen bzw. Zwängungen am Schwenkantrieb und dessen Abtrieb auf. Vielmehr kann der Schwenkantrieb bei einer Verformung des Traglenkers bzw. der Lagerstellen diesen Bewegungen aufgrund seiner direkten Kopplung bzw. Verbindung mit dem Schwenkantrieb-Lagerbeschlag lastfrei folgen. Dies trägt wesentlich zu einer Verbesserung der Funktion und Lebensdauer des Schwenkantriebs und damit zu einer höheren Betriebssicherheit der gesamten Luftfahrzeug-Türanordnung bei.

Aufgrund des Ersatzes der einen Lagerstelle des betreffenden Gelenks durch den Schwenkantrieb-Lagerbeschlag, der bzw. dessen Komponenten eine Lagerstellenfunktion übernehmen, und der direkten Anbindung des Schwenkantriebs an diesen Beschlag kann der für diesen Teil der Türkinematik erforderliche Bauraum minimiert bzw. der bei einer Traglenkerkonstruktion gegebene Bauraum, insbesondere aber auch die zur Verfügung stehende Bauhöhe, besser genutzt und für eine Integration des Schwenkantriebs in die Traglenkerstruktur verwendet werden. Die erfindungsgemäße Türanordnung kann im Vergleich zu vorbekannten Türanordnungen, bei denen sich der Schwenkantrieb seitlich am Traglenker erstreckt, auch weitaus schmaler bzw. dünner gebaut werden. Wie zum Beispiel aus einem Vergleich mit der Fig. 7 deutlich wird, können bei der erfindungsgemäßen Lösung insbesondere auch die bisher für separate Kraftübertragungsmittel eines konventionellen Schwenkantriebs erforderliche weitere Lagerstelle entfallen.

Die Minimierung des erforderlichen Bauraums gestattet auch eine hervorragende Zugänglichkeit des Schwenkantriebs. Und der Schwenkantrieb lässt sich bei Bedarf leicht vom Schwenkantrieb-Lagerbeschlag trennen bzw. an diesen anbinden, was eine schnelle und simple Montage und Demontage ermöglicht. Eine Demontage der gesamten Tür ist hierbei nicht notwendig. Im Falle einer Beschädigung oder eines Verschleißes der Befestigung oder der Lagerstelle des Schwenkantriebs ist es aufgrund der leichten Austauschbarkeit des Schwenkantrieb-Lagerbeschlags auch nicht erforderlich, den gesamten Traglenker auszutauschen. Vielmehr wird es in vielen Fällen ausreichen, lediglich den Schwenkantrieb-Lagerbeschlag auszutauschen. Dies ist auch im Hinblick auf eine Reparierbarkeit des Traglenkers von Vorteil. Auf diese Weise können Wartungs- und Reparaturarbeiten vereinfacht und Reparatur- und Wartungskosten gesenkt werden.

Darüber hinaus ist bei der erfindungsgemäßen Luftfahrzeug-Türanordnung im Vergleich zu konventionellen Konstruktionen auch die Anzahl der für die Türöffnungs- und Verschließfunktionen erforderlichen Bauteile erheblich reduziert, was wiederum einer Gewichtsverminderung und damit dem Leichtbau zuträglich ist.

Die zuvor genannten Vorteile werden insbesondere durch den Schwenkantrieb-Lagerbeschlag, seiner besonderen Anordnung und seiner Vielfachfunktionen ermöglicht.

Weitere bevorzugte und vorteilhafte Ausgestaltungsmerkmale der erfindungsgemäßen Luftfahrzeug-Türanordnung sind Gegenstand der Unteransprüche.

Ein bevorzugtes Ausführungsbeispiel der Erfindung mit zusätzlichen Ausgestaltungsdetails und weiteren Vorteilen ist nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Perspektivansicht einer wesentlichen Komponente, d.h. einen Traglenkers, einer erfindungsgemäßen Luftfahrzeug-Türanordnung;
- Fig. 2: eine vergrößerte, perspektivische Detailansicht des rechten, oberen Bildbereichs von Fig. 1;
- Fig. 3: eine schematische Schnittansicht entlang der Linie III-III von Fig. 1 zur Veranschaulichung einer mit einem Schwenkantrieb-Lagerbeschlag realisierten ersten Gelenk-Variante eines Traglenkers;
- Fig. 4: eine zur Fig. 3 analoge Schnittansicht zur Veranschaulichung einer mit einem Schwenkantrieb-Lagerbeschlag realisierten zweiten Gelenk-Variante eines Traglenkers;
- Fig. 5: eine schematische Perspektivansicht einer Luftfahrzeug-Türanordnung gemäß einem ersten Stand der Technik,
- Fig. 6: eine schematische Perspektivansicht einer Luftfahrzeug-Türanordnung gemäß einem zweiten, nicht vorveröffentlichten Stand der Technik, und
- Fig. 7: einen Traglenker einer Luftfahrzeug-Türanordnung gemäß einem dritten, nicht vorveröffentlichten Stand der Technik.

### DARSTELLUNG EINES BEVORZUGTEN AUSFÜHRUNGSBEISPIELS

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

Eine erfindungsgemäße Luftfahrzeug-Türanordnung (hier: für ein Flugzeug mit Druckkabine) umfasst im vorliegenden Ausführungsbeispiel wie beim Stand der Technik nach Fig. 6 (es werden entsprechende Bezugszeichen verwendet) eine als Passagiertür ausgestaltete Flugzeugtür 2 mit einer Türstruktur 4 und einen Türrahmen 6, der durch eine Rahmenstruktur eines Flugzeugsrumpfes gebildet ist. Ferner umfasst die Türanordnung einen Traglenker 8, der vorzugsweise aus Faserverbundwerkstoff (wie zum Beispiel CFK), einer Aluminiumlegierung, oder einem anderen geeigneten Werkstoff bzw. einer Werkstoffkombination gefertigt ist. Der Traglenker 8 besitzt eine türseitige Schwenkachse AD, an der die Tür 2 seitlich schwenkbar gelagert ist, und eine rahmenseitige Schwenkachse AF, an welcher der Traglenker 8 schwenkbar am Türrahmen 6 gelagert ist. An einem türseitigen Bereich des Traglenkers 8 ist ein Schwenkantrieb 10 zum Verschwenken der Tür2 angeordnet. Bei dem Schwenkantrieb 10 handelt es sich im vorliegenden Fall um einen elektromechanischen Drehaktuator. Die Erfindung ist jedoch nicht ausschließlich auf diesen Schwenkantriebstyp beschränkt. Je nach Anwendungsfall können auch andere geeignete Schwenkantriebe, z.B. hydraulische oder pneumatische Aktuatoren, eingesetzt werden.

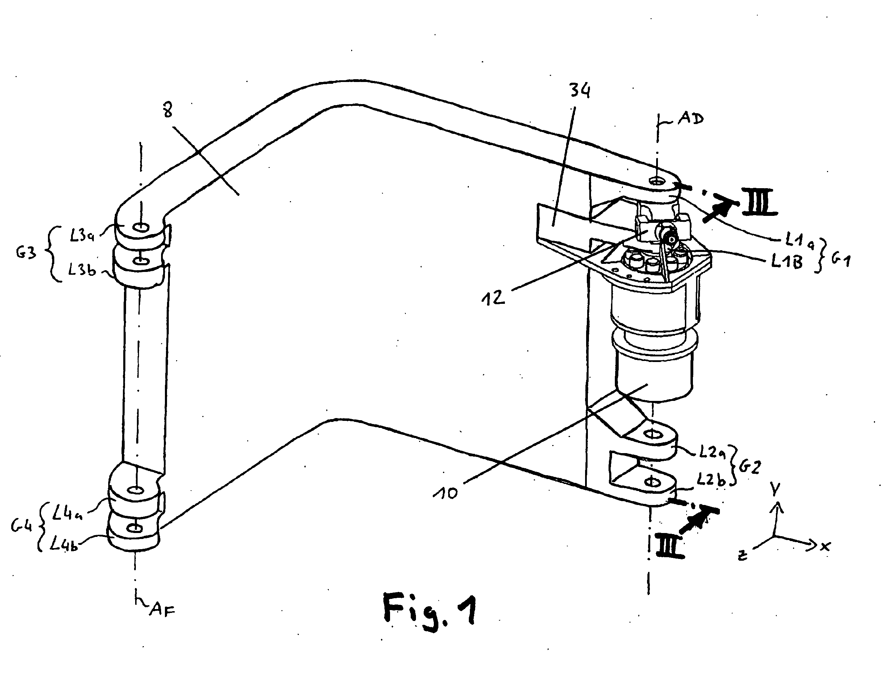

Fig. 1 zeigt in einer schematischen Perspektivansicht eine wesentliche Komponente, d.h. den mit dem Schwenkantrieb 10 ausgestatteten Traglenker 8, der erfindungsgemäßen Flugzeug-Türanordnung. Wie in dieser Zeichnung zu erkennen, ist die rahmenseitige, d.h. die dem Türrahmen zugeordnete Schwenkache AF des Traglenkers 8 durch zwei in Höhenrichtung Y des Traglenkers 8 voneinander beabstandete gabelförmige Gelenke G3, G4 definiert. Jedes Gelenk G3, G4 besitzt zwei in Höhenrichtung Y voneinander beabstandete Lagerstellen L3a, L3b, L4a, L4b. Jede dieser Lagerstellen L3a, L3b, L4a, L4b wird durch ein Augterminal gebildet.

Auch die türseitige, d.h. die der Tür 2 zugeordnete Schwenkachse AD des Traglenkers 8 ist durch zwei in Höhenrichtung Y des Traglenkers 8 voneinander beabstandete Gelenke G1, G2 definiert. Das untere Gelenk G2 ist ähnlich wie die Gelenke G3 und G4 ausgebildete, d.h. es ist gabelförmig und besitzt zwei in Höhenrichtung Y voneinander beabstandete Lagerstellen L2a, L2b, die jeweils durch ein Augterminal gebildet sind.

Das obere Gelenk G1 hingegen besitzt zwar ebenfalls zwei in Höhenrichtung Y voneinander beabstandete Lagerstellen, jedoch ist diese Gelenkkonstruktion als solche grundsätzlich anders als bei den Gelenken G2, G3 und G4 ausgestaltet. Genauer gesagt, ist eine (hier: L1B) der zwei Lagerstellen L1a, L1B des rahmenseitigen oberen Gelenks G1 als ein Schwenkantrieb-Lagerbeschlag 34 ausgebildet, an dem der Schwenkantrieb 10 befestigt ist. Wie aus der Fig. 1 ersichtlich ist, bildet der Schwenkantrieb-Lagerbeschlag 34 (bzw. Komponenten oder Bereiche davon) bezogen auf die Höhenrichtung Y des Traglenkers nun die untere Lagerstelle L1B des oberen (G1) der zwei türseitigen Gelenke G1, G2.

Es sei an dieser Stelle angemerkt, dass je nach Ausgestaltung und Positionierung des Traglenkers 8 und der erforderlichen Anordnung des Schwenkantriebs 10 der Schwenkantrieb-Lagerbeschlag 34 bezogen auf die Höhenrichtung Y des Traglenkers 8 natürlich auch die obere Lagerstelle L2a des unteren (G2) der zwei Gelenke G1, G2 bilden kann.

Zudem ist im Sinne der Erfindung z.B. eine Konstruktion mit zwei Schwenkantrieben realisierbar, bei der zwei Schwenkantrieb-Lagerbeschläge entsprechend der im letzten und vorletzten Absatz beschriebenen Anordnung vorgesehen sind, d.h. einer am Gelenk G1 und ein anderer am Gelenk G2.

Der Schwenkantrieb-Lagerbeschlag 34 ist vorzugsweise als Integralbauteil (z.B. aus einer Aluminium- oder Titanlegierung, Faserverbundwerkstoff, oder dergleichen) ausgeführt, er kann grundsätzlich jedoch auch als Differentialbauteil ausgelegt sein. Der Schwenkantrieb-Lagerbeschlag 34 kann bei hinreichend genauer Positionierung am Traglenker 8 bereits fertig bearbeitet bzw. komplett vorgefertigt sein oder aber auch im angebauten Zustand, d.h. am Traglenker 8, nachträglich bearbeitet werden, um eine genaue Fluchtung und Positionierung des Schwenkantriebs 10 zu erzielen.

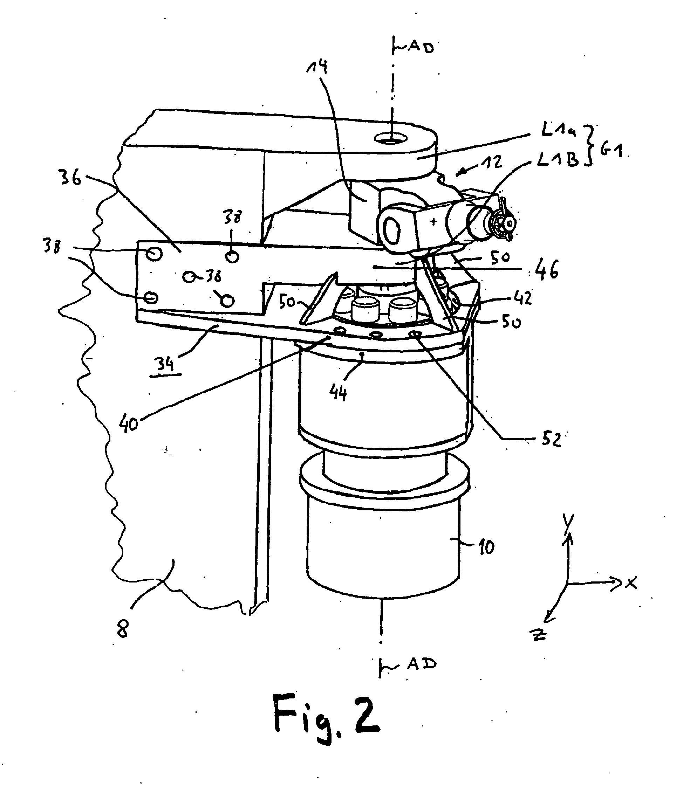

Aus der Fig. 2, die eine vergrößerte, perspektivische Detailansicht des rechten, oberen Bildbereichs von Fig. 1 darstellt, sind weiteres Einzelheiten der erfindungsgemäßen Türanordnung im Bereich des Gelenks G1 des Traglenkers 8 ersichtlich. Der Schwenkantrieb-Lagerbeschlag 34 ist in diesem Beispiel als ein separates Bauteil ausgebildet und besitzt einen Traglenker-Befestigungsabschnitt 36, der in diesem Fall gabel- oder klauenförmig ausgebildet ist und den Traglenker 8 von dessen freien Seitenrand her an zwei Seiten umgreift. Die Innenflächen der gabelförmigen Bereiche des Traglenker-Befestigungsabschnitts 36 bilden hierbei Anlageflächen, die an den korrespondierenden Seitenflächen des Traglenkers 8 anliegen. Der Schwenkantrieb-Lagerbeschlag 34 ist durch geeignete Befestigungsmittel 38 lösbar am Traglenker 8 fixiert. Bei diesen Befestigungsmitteln 38 handelt es sich hier um Schraubbolzen, Passbolzen oder dergleichen.

Des Weiteren weist der Schwenkantrieb-Lagerbeschlag 34 einen sich im wesentlichen senkrecht (und damit etwa in einer X-Z-Ebene) zur türseitigen Schwenkachse AD erstreckenden, plattenförmigen Schwenkantrieb-Befestigungsabschnitt 40 (nachfolgend kurz Grundplatte 40 genannt) auf, der eine Durchgangsöffnung 42 besitzt und mit einem stirnseitigen Abschnitt bzw. Flansch 44 des Schwenkantriebs 10 verbindbar ist. Es wird ausdrücklich darauf hingewiesen, dass die Erfindung nicht auf diese konkrete Ausführungsform des Schwenkantrieb-Befestigungsabschnitts 40 beschränkt ist. Der Schwenkantrieb-Befestigungsabschnitt 40 kann selbstverständlich auch andersartig ausgestaltet bzw. geformt und hierbei auf den jeweils verwendeten Schwenkantriebstyp und dessen jeweilige Adapterstellen abgestimmt sein. Wie in der Fig. 2 erkennbar, geht die Grundplatte 40 seitlich in den Traglenker-Befestigungsabschnitt 36 über bzw. läuft in die jeweiligen gabelförmigen Bereiche des Traglenker-Befestigungsabschnitts 36 aus.

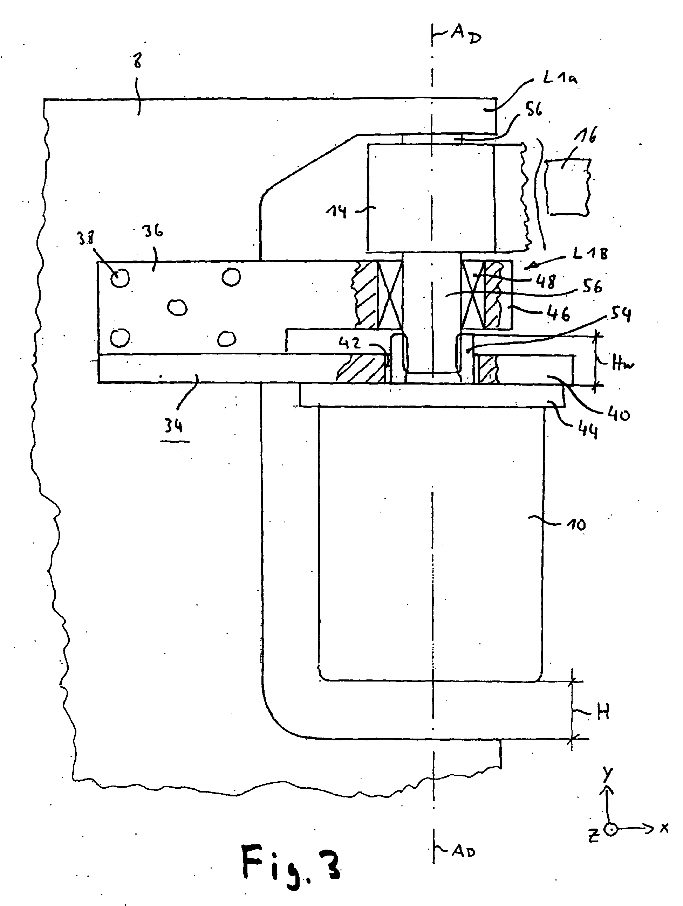

Oberhalb der Grundplatte 40 und in einem Abstand zu dieser besitzt der Schwenkantrieb-Lagerbeschlag 34 einen Lagerabschnitt 46 (nachfolgend kurz Lagerplatte 46 genannt), der eine Bohrung und mindestens ein in dieser Bohrung angeordnetes Lagerelement 48 (siehe Fig. 3) besitzt und somit die Lagerstelle L1B des Gelenkes G1 bildet. Die Lagerplatte 46 geht gemäß der Darstellung von Fig. 2 auf der linken Seite in den Traglenker-Befestigungsabschnitt 36 über. Ferner ist die Lagerplatte 46 über mehrere Rippen 50 mit der Grundplatte 40 verbunden. Die zuvor beschriebene Bauweise dient wesentlich dem Leichtbau und damit einem geringen Gewicht des Schwenkantrieb-Lagerbeschlags 34. Grundsätzlich kann der Schwenkantrieb-Lagerbeschlag 34 aber auch zum Beispiel mit nicht-unterbrochenen Materialübergängen von Grundplatte 40 zu Lagerplatte 46 und Traglenker-Befestigungsabschnitt 36 oder dergleichen ausgebildet werden, beispielweise in Form einer durchgehenden Verbindungswand zwischen den genannten Elementen. Auch andere, massivere Bauweise sind denkbar.

Der Fig. 2 ist ferner zu entnehmen, dass der Schwenkantrieb 10 über seinen stirnseitigen Flansch 44 von unten her an die Grundplatte 40 angesetzt und mit Hilfe von Befestigungsmitteln 52, wie z.B. einer Verschraubung und/oder Passstiften und/oder Passbolzen oder dergleichen an der Grundplatte 40 lösbar befestigt ist. Hierbei liegt eine obere Flanschfläche des Schwenkantriebs 10 an einer unteren Anlagefläche der Grundplatte 40 an. Die im Betrieb auftretende Auflagerreaktion aus dem Antriebsmoment des Schwenkantriebs 10 wird durch die Befestigungsmittel 52 (bzw. Teilen davon) formschlüssig in den Schwenkantrieb-Lagerbeschlag 34 eingeleitet, der wiederum diese Kräfte auf den Traglenker 8 überträgt. Eine Kraftübertragung vom Schwenkantrieb 10 zum Schwenkantrieb-Lagerbeschlag 34 ist grundsätzlich aber auch durch Reibschluss möglich.

Bei der erfindungsgemäßen Türanordnung gemäß diesem Ausführungsbeispiel ist der Schwenkantrieb 10 in der türseitigen Schwenkachse AD und zwischen den beiden Gelenken G1 und G2 angeordnet. Die türseitige Schwenkachse AD läuft hierbei durch den Schwenkantrieb 10 hindurch. Darüber hinaus ist der Schwenkantrieb 10 zentrisch zur türseitigen Schwenkachse AD angeordnet, so dass die Abtriebachse des Schwenkantriebs 10 mit der türseitigen Schwenkachse AD des Traglenkers 8 fluchtet. Die genaue fluchtende Ausrichtung des Schwenkantriebs 10 bzw. seiner Abtriebachse kann im montierten Zustand des Schwenkantriebs 10 z.B. durch Verändern der Position des Schwenkantrieb-Lagerbeschlags 34 auf Seiten des Traglenker-Befestigungsabschnitts 36 erfolgen. In einer geeigneten Position kann dann der Traglenker-Befestigungsabschnitt 36 fest mit dem Traglenker 8 verbunden werden. Zu diesem Zweck können entsprechende Einstellmöglichkeiten am Traglenker-Befestigungsabschnitt 36, dem Traglenker 8 selbst bzw. den Befestigungsmitteln 38 vorgesehen sein. Falls der Traglenker-Befestigungsabschnitt 36 hingegen bereits in einer endgültigen Position am Traglenker 8 fixiert ist, so kann die Lage des Schwenkantriebs 10 z.B. über die Grundplatte 40 und/oder den Flansch 44 eingestellt und gesichert werden. Auch hier können entsprechende Einstellmöglichkeiten vorgesehen sein.

Wie besonders aus den Fig. 1 und 2 hervorgeht, greift zwischen der oberen Lagerstelle L1a und dem Schwenkantrieb-Lagerbeschlag 34 ein Abtriebselement 12 am Traglenker 8 und dessen Schwenkantrieb 10 an. Dieses Abtriebselement 12, welches auf einer Seite mit dem Schwenkantrieb 10 und auf der anderen Seite mit der Tür 2 direkt oder indirekt gekoppelt ist, überträgt die Stell- bzw. Drehbewegung des Schwenkantriebs 10 auf die Tür. Das Abtriebselement 12 umfasst auf Seiten des Traglenkers 8 zum Beispiel ein Kreuzgelenk 14 und einen daran befestigten oberen Lenker, insbesondere einen oberen Dreieckslenker 16, der sich zur Tür erstreckt. Ein entsprechendes Kreuzgelenk sowie ein unterer Lenker bzw. Dreieckslenker finden sich, jedoch in einer nicht-angetriebenen Ausführung, auch am unteren türseitigen Gelenk G2 des Traglenkers 8.

In der Fig. 3, die eine schematische Schnittansicht entlang der Linie III-III von Fig. 1 zeigt, sind weitere Einzelheiten dieser Konstruktion zur Veranschaulichung einer mit dem Schwenkantrieb-Lagerbeschlag 34 realisierten ersten Gelenk-Variante dargestellt. Die Verrippung 50 ist in der Fig. 3 der besseren Übersichtlichkeit halber nicht dargestellt.

Wie in der Fig. 3 angedeutet, besitzt der Schwenkantrieb 10 eine hohle Abtriebswelle 54, in die ein Lager- bzw. Gelenkzapfen 56 mit einem ersten unteren Zapfenbereich drehfest eingreift. Der Gelenkzapfen 56 erstreckt sich mit der türseitigen Gelenkachse AD fluchtend durch die erste Lagerstelle L1 a und in den Schwenkantrieb-Lagerbeschlag 34 und durch dessen Lagerplatte 46 und Lagerelement 48 hindurch in die hohle Abtriebswelle 54. In einem ersten oberen Bereich ist der Gelenkzapfen 56 drehfest mit dem Kreuzgelenk 14 (als Teil des Abtriebselements 12) verbunden, wodurch die Kraft- und Drehmomentenübertragung vom Schwenkantrieb 10 zur Tür sichergestellt ist. In einem zweiten unteren Bereich, d.h. oberhalb der hohlen Abtriebswelle 54, ist der Gelenkzapfen 56 radial in dem Lagerelement 48 der Lagerplatte 46 und in einem zweiten oberen Bereich, d.h. oberhalb des Kreuzgelenks 14, in dem Augterminal der Lagerstelle L1a radial gelagert. Für den Gelenkzapfen 56 ist zweckmäßigerweise eine Axialsicherung vorgesehen.

Diese Bauweise gestattet eine besonders einfache und effektive Montage und Demontage des Schwenkantriebs 10. Wie aus der Zeichnung nachvollziehbar ist, muss der Schwenkantrieb 10 nach dem Lösen der Verbindung (Befestigungsmittel 38) zur Grundplatte 40 zur vollständigen Demontage nur noch um einen geringen Weg, der faktisch der Länge HW der über die Stirnseite des Flansches 44 hinaus stehenden hohlen Abtriebswelle 54 entspricht, nach unten gezogen worden. Die hierzu benötigte Höhe H (H > HW) des unterhalb des Schwenkantriebs 10 befindlichen Freiraums ist dadurch sehr gering, was äußerst vorteilhaft ist.

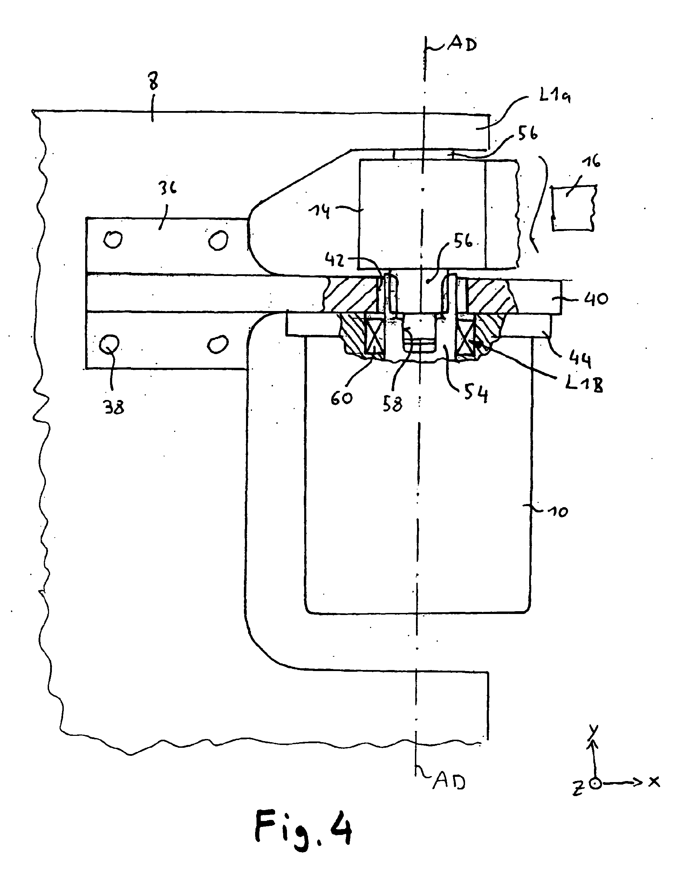

Fig. 4 zeigt eine zur Fig. 3 analoge Schnittansicht zur Veranschaulichung einer mit dem Schwenkantrieb-Lagerbeschlag 34 realisierten zweiten Gelenk-Variante des Traglenkers 8. Diese Ausführungsform verzichtet auf die Lagerplatte 46 und das Lagerelement 48 des Schwenkantrieb-Lagerbeschlags 34 von Fig. 3. Statt dessen greift der Gelenkzapfen 56 über eine radiale Zentrierpassung 58 direkt in die hohle Abtriebswelle 54 ein und stützt sich radial an dieser ab. Ferner stützt sich der Gelenkzapfen zur Drehmomentenübertragung über seine Außenverzahnung tangential an einer korrespondierenden Innenverzahnung der hohlen Abtriebswelle 54 ab. Wie in der Zeichnung angedeutet, kann dann zum Beispiel ein Radiallager 60 des Schwenkantriebs 10 selbst die Funktion der zweiten Lagerstelle L1B des Gelenks G1 übernehmen.

Weitere Ausgestaltungsmerkmale der erfindungsgemäßen Türanordnung können beispielsweise so ausgeführt sein, wie es im Zusammenhang mit der vorbekannten Türanordnung in Fig. 6 gezeigt und beschrieben ist.

Die Erfindung ist nicht auf das obige Ausführungsbeispiel, das lediglich der allgemeinen Erläuterung des Kemgedankens der Erfindung dient, beschränkt. Im Rahmen des Schutzumfangs kann die erfindungsgemäße Luftfahrzeug-Türanordnung vielmehr auch andere als die oben konkret beschriebene Ausgestaltungsform annehmen. Obwohl in dem obigen Ausführungsbeispiel der Schwenkantrieb-Lagerbeschlag als separates Bauteil ausgestaltet ist, kann der Schwenkantrieb-Lagerbeschlag grundsätzlich auch integral mit dem Schwenkarm ausgebildet sein. Es ist zudem möglich, dass die Abtriebsachse des Schwenkantriebs seitlich der türseitigen Gelenkachse des Traglenkers verläuft. Dies ist beispielweise dann der Falle, wenn die Abtriebsachse nicht direkt, sondern über mindestens ein weiteres, seitlich zwischengeschaltetes Antriebsglied mit dem Lagerzapfen bzw. dem Abtriebselement verbunden ist.

Die Funktion des in dem obigen Ausführungsbeispiel beschriebenen Gelenkzapfens, der mit dem das Abtriebselement drehfest verbunden ist, kann auch eine Abtriebswelle des Schwenkantriebs übernehmen. Die Abtriebswelle des Schwenkantriebs/Aktuators ist damit für dasjenige Gelenk des Traglenkers, an dem der Schwenkantrieb-Lagerbeschlag vorgesehen ist, Teil des Gelenkmechanismus und definiert einen Teilabschnitt der türseitigen Gelenkachse AD. Die Gelenke (bzw. Teile davon) des Traglenkers müssen auch nicht zwangsläufig gabelförmig oder mit Hilfe von Augterminals ausgeführt sein. Insbesondere die Gelenke G2, G3 und G4 können mit Hilfe anderer geeigneter Gelenk- oder Lagermittel Mittel, z.B. Kugelgelenke, Scharniere, Gelenkstangen oder dergleichen, sowie Mischformen daraus, realisiert werden.

Die erfindungsgemäße Ausgestaltung und Anordnung des Schwenkantrieb-Lagerbeschlags kann auch auf die Gelenke der rahmenseitigen Schwenkachse des Traglenkers angewendet werden, falls der Schwenkantrieb an der rahmenseitigen Schwenkachse angeordnet wird. Basierend auf dem erfindungsgemäßen Prinzip sind überdies Luftfahrzeug-Türanordnungen realisierbar, bei denen die Tür nicht seitlich, sondern z.B. in der Art einer Flügeltür um eine z.B. horizontale Achse nach oben oder unten verschwenkt wird.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Tür
- 4: Türstruktur
- 6: Türrahmen
- 8: Traglenker

- 10: Schwenkantrieb
- 12: Abtriebselement
- 14: Kreuzgelenk von 12
- 16: Oberer Dreieckslenker
- 18: Unterer Dreieckslenker

- 20: Anlagebeschläge
- 22: Wellen
- 24: Führungskulissen
- 26: Steuerlenker
- 28: Kraftübertragungsmittel

- 30: Welle von 28
- 32: Gelenkstift von 14
- 34: Schwenkantrieb-Lagerbeschlag
- 36: Traglenker-Befestigungsabschnitt von 34
- 38: Befestigungsmittel

- 40: Schwenkantrieb-Befestigungsabschnitt / Grundplatte von 34
- 42: Durchgangsöffnung in 40
- 44: Stirnseitigen Abschnitt / Flansch von 10
- 46: Lagerabschnitt / Lagerplatte von 34
- 48: Lagerelement in 46

- 50: Rippen
- 52: Befestigungsmittel
- 54: Hohle Abtriebswelle von 10
- 56: Gelenkzapfen
- 58: Zentrierpassung

- 60: Radiallager von 10

- 102: Traglenker
- 104: Schwenkantrieb / Aktuator
- 106: Abtriebselement
- 108: Lagerung für 106
- 110: Zwischenhebel

- AD: Türseitige Schwenkachse
- AF: Rahmenseitige Schwenkachse

- G1: Türseitiges Gelenk von 8
- G2: Türseitiges Gelenk von 8
- G3: Rahmenseitiges Gelenk von 8
- G4: Rahmenseitiges Gelenk von 8

- H: Benötigte Höhe für Montage/Demontage von 10
- HW: Außenlänge von 54 in Richtung Y

- L1a: Lagerstelle
- L1b: Lagerstelle
- L2a: Lagerstelle
- L2b: Lagerstelle
- L3a: Lagerstelle
- L3b: Lagerstelle
- L4a: Lagerstelle
- L4b: Lagerstelle
- Lx: Weitere Lagerstelle für 106

- L1B: Lagerstelle, durch 34 gebildet

- X: Breitenrichtung
- Y: Höhenrichtung
- Z: Tiefenrichtung

## Patentansprüche

1. Luftfahrzeug-Türanordnung, insbesondere für ein Flugzeug, umfassend
- eine Tür (2);
- einen Türrahmen (6);
einen Traglenker (8) mit einer türseitigen Schwenkachse (AD), an der die Tür (2) schwenkbar gelagert ist, und einer rahmenseitigen Schwenkachse (AF), an welcher der Traglenker (8) schwenkbar am Türrahmen (6) gelagert ist, wobei zumindest die türseitige Schwenkachse (AD) durch zwei in Höhenrichtung (Y) des Traglenkers (8) voneinander beabstandete Gelenke (G1, G2) definiert ist von denen mindestens eines (G1; G2) zwei in Höhenrichtung (Y) voneinander beabstandete Lagerstellen (L1a, L1b; L2a, L2b) besitzt;
- einen am türseitigen Bereich des Traglenkers (8) angeordneten Schwenkantrieb (10) zum Verschwenken der Tür (2); und
- ein Abtriebselement (12; 14, 16), welches mit dem Schwenkantrieb (10) und der Tür (2) gekoppelt ist und eine Stellbewegung des Schwenkantriebs (10) auf die Tür (2) überträgt;
**dadurch gekennzeichnet, dass**
- eine (L1B) der zwei Lagerstellen (L1a, L1B) von mindestens einem (G1) der türseitigen Gelenke (G1, G2) als ein Schwenkantrieb-Lagerbeschlag (34) ausgebildet ist (L1B), an dem der Schwenkantrieb (10) befestigt ist.

2. Luftfahrzeug-Türanordnung nach Anspruch 1,
**dadurch gekennzeichnet, dass**
der Schwenkantrieb-Lagerbeschlag (34) bezogen auf die Höhenrichtung (Y) des Traglenkers (8) die untere Lagerstelle (L1B) des oberen (G1) der zwei Gelenke (G1, G2) bildet.

3. Luftfahrzeug-Türanordnung nach Anspruch 1 oder 2,
**dadurch gekennzeichnet, dass**
der Schwenkantrieb-Lagerbeschlag (34) bezogen auf die Höhenrichtung. (Y) des Traglenkers (8) die obere Lagerstelle (L2a) des unteren (G2) der zwei Gelenke (G1, G2) bildet.

4. Luftfahrzeug-Türanordnung nach einem oder mehreren der vorhergenannten Ansprüche,
**dadurch gekennzeichnet, dass**
der Schwenkantrieb-Lagerbeschlag (34) ein separates Bauteil ist, welches durch Befestigungsmittel (38) lösbar am Traglenker (8) fixiert ist.

5. Luftfahrzeug-Türanordnung nach einem oder mehreren der vorhergenannten Ansprüche,
**dadurch gekennzeichnet, dass**
der Schwenkantrieb-Lagerbeschlag (34) integral mit dem Traglenker (8) ausgebildet ist.

6. Luftfahrzeug-Türanordnung nach einem oder mehreren der vorhergenannten Ansprüche,
**dadurch gekennzeichnet, dass**
der Schwenkantrieb-Lagerbeschlag (34) einen Lagerabschnitt (46) besitzt, der die eine Lagerstelle (L1B) bildet.

7. Luftfahrzeug-Türanordnung nach einem oder mehreren der vorhergenannten Ansprüche,
**dadurch gekennzeichnet, dass**
der Schwenkantrieb-Lagerbeschlag (34) einen sich im Wesentlichen senkrecht zur türseitigen Schwenkachse (AD) erstreckenden Schwenkantrieb-Befestigungsabschnitt (40) besitzt, der mit einem stirnseitigen Abschnitt (44) des Schwenkantriebs (10) verbindbar ist.

8. Luftfahrzeug-Türanordnung nach einem oder mehreren der vorhergenannten Ansprüche,
**dadurch gekennzeichnet, dass**
der Schwenkantrieb-Lagerbeschlag (34) einen Traglenker-Befestigungsabschnitt (36) besitzt.

9. Luftfahrzeug-Türanordnung nach einem oder mehreren der vorhergenannten Ansprüche,
**dadurch gekennzeichnet, dass**
der Schwenkantrieb (10) eine Abtriebachse besitzt, welche mit der türseitigen Schwenkachse (AD) des Traglenkers (8) fluchtet,

10. Luftfahrzeug-Türanordnung nach einem oder mehreren der vorhergenannten Ansprüche,
**dadurch gekennzeichnet, dass**
der Schwenkantrieb (10) in der türseitigen Schwenkachse (AD) und zwischen den beiden Gelenken (G1, G2) angeordnet ist.

11. Luftfahrzeug-Türanordnung nach einem oder mehreren der vorhergenannten Ansprüche,
**dadurch gekennzeichnet, dass**
- der Schwenkantrieb (10) eine hohle Abtriebswelle (54) besitzt, in die ein Gelenkzapfen (56) drehfest eingreift, der sich durch die erste Lagerstelle (L1a) und in den Schwenkantrieb-Lagerbeschlag (34) erstreckt, und
- das Abtriebselement (12; 14, 16) drehfest mit dem Gelenkzapfen (56) verbunden ist.

12. Luftfahrzeug-Türanordnung nach einem oder mehreren der vorhergenannten Ansprüche,
**dadurch gekennzeichnet, dass**
ein Lagerelement (60) des am Schwenkantrieb-Lagerbeschlag (34) befestigten Schwenkantriebs (10) die eine Lagerstelle (L1B) bildet.

13. Luftfahrzeug-Türanordnung nach einem oder mehreren der vorhergenannten Ansprüche,
**dadurch gekennzeichnet, dass**
eine Abtriebswelle des Schwenkantriebs (10) einen Gelenkzapfen desjenigen Gelenkes (G1; G2) bildet, an dem der Schwenkantrieb-Lagerbeschlag (34) vorgesehen ist und das Abtriebselement (12; 14, 16) drehfest mit der den Gelenkzapfen (56) bildenden Abtriebswelle verbunden ist.

14. Luftfahrzeug-Türanordnung nach einem oder mehreren der vorhergenannten Ansprüche,
**dadurch gekennzeichnet, dass**
das Abtriebselement (12; 14, 16) zwischen der einen Lagerstelle (L1a) und dem Schwenkantrieb-Lagerbeschlag (34) am Traglenker (8) angreift.

15. Luftfahrzeug-Türanordnung nach einem oder mehreren der vorhergenannten Ansprüche,
**dadurch gekennzeichnet, dass**
die Tür (2) eine Passagiertür ist.

## Claims

1. An aircraft door arrangement, in particular for a plane, comprising
- a door (2) ;
- a door frame (6);
- a support link (8) having a door-side swivelling axis (AD), at which the door (2) is pivotably supported, and a frame-side swivelling axis (AF), at which the support link (8) is pivotably supported on the door frame (6), wherein at least the door-side swivelling axis (AD) is defined by two joints (G1, G2), which are mutually spaced apart in the height direction (Y) of the support link (8) and of which at least one (G1; G2) has two bearing points (L1a, L1b, L2a, L2b) mutually spaced apart in the height direction (Y);
- a rotary actuator (10) disposed on the door-side region of the support link (8) for swivelling the door (2); and
- an output element (12; 14, 16), which is coupled to the rotary actuator (10) and the door (2) and transmits an actuating motion of the rotary actuator (10) to the door (2);
**characterized in that**
- one (L1B) of the two bearing points (L1a, L1B) of at least one (G1) of the door-side joints (G1, G2) takes the form of a rotary-actuator bearing fitting (34) (L1B), to which the rotary actuator (10) is fastened.

2. An aircraft door arrangement according to claim 1,
**characterized in that**
the rotary-actuator bearing fitting (34) forms, in relation to the height direction (Y) of the support link (8), the lower bearing point (L1B) of the upper (G1) of the two joints (G1, G2) .

3. An aircraft door arrangement according to claim 1 or 2,
**characterized in that**
the rotary-actuator bearing fitting (34) forms, in relation to the height direction (Y) of the support link (8), the upper bearing point (L2a) of the lower (G2) of the two joints (G1, G2).

4. An aircraft door arrangement according to one or more of the preceding claims,
**characterized in that**
the rotary-actuator bearing fitting (34) is a separate component, which is fixed by fastening means (38) detachably to the support link (8).

5. An aircraft door arrangement according to one or more of the preceding claims,
**characterized in that**
the rotary-actuator bearing fitting (34) is formed integrally with the support link (8).

6. An aircraft door arrangement according to one or more of the preceding claims,
**characterized in that**
the rotary-actuator bearing fitting (34) has a bearing portion (46), which forms the one bearing point (L1B).

7. An aircraft door arrangement according to one or more of the preceding claims,
**characterized in that**
the rotary-actuator bearing fitting (34) has a rotary-actuator fastening portion (40), which extends substantially at right angles to the door-side swivelling axis (AD) and is connectable to an end portion (44) of the rotary actuator (10).

8. An aircraft door arrangement according to one or more of the preceding claims,
**characterized in that**
the rotary-actuator bearing fitting (34) has a support-link fastening portion (36).

9. An aircraft door arrangement according to one or more of the preceding claims,
**characterized in that**
the rotary actuator (10) has an output axis aligned with the door-side swivelling axis (AD) of the support link (8).

10. An aircraft door arrangement according to one or more of the preceding claims,
**characterized in that**
the rotary actuator (10) is disposed in the door-side swivelling axis (AD) and between the two joints (G1, G2).

11. An aircraft door arrangement according to one or more of the preceding claims,
**characterized in that**
- the rotary actuator (10) has a hollow output shaft (54), engaging into which in a rotationally fixed manner is a pivot pin (56), which extends through the first bearing point (L1a) and into the rotary-actuator bearing fitting (34), and
- the output element (12; 14, 16) is connected in a rotationally fixed manner to the pivot pin (56).

12. An aircraft door arrangement according to one or more of the preceding claims,
**characterized in that**
a bearing element (60) of the rotary actuator (10) fastened to the rotary-actuator bearing fitting (34) forms the one bearing point (L1B).

13. An aircraft door arrangement according to one or more of the preceding claims,
**characterized in that**
an output shaft of the rotary actuator (10) forms a pivot pin of the joint (G1; G2) at which the rotary-actuator bearing fitting (34) is provided, and the output element (12; 14, 16) is connected in a rotationally fixed manner to the output shaft forming the pivot pin (56).

14. An aircraft door arrangement according to one or more of the preceding claims,
**characterized in that**
the output element (12; 14, 16) acts between the one bearing point (L1a) and the rotary-actuator bearing fitting (34) upon the support link (8).

15. An aircraft door arrangement according to one or more of the preceding claims,
**characterized in that**
the door (2) is a passenger door.

## Revendications

1. Agencement de porte pour aéronef, notamment pour un avion, comprenant
- une porte (2) ;
- un cadre de porte (6) ;
- un bras oscillant porteur (8) avec axe de pivotement côté porte (AD) sur lequel la porte (2) est logée de façon pivotante et un axe de pivotement côté cadre (AF) sur lequel le bras oscillant porteur (8) est logé de façon pivotante sur le cadre de porte (6), au moins l'axe de pivotement côté porte (AD) étant défini par deux articulations (G1, G2) mutuellement distancées dans le sens de la hauteur (Y) du bras oscillant porteur (8), dont au moins l'une (G1 ; G2) comporte deux points d'appui (L1a, L1b ; L2a, L2b) mutuellement distancés dans le sens de la hauteur (Y) ;
- un entraînement pivotant (10) disposé dans la région côté porte du bras oscillant porteur (8), pour faire pivoter la porte (2) ; et
- un élément de sortie (12 ; 14 ; 16) qui est couplé avec l'entraînement pivotant (10) et avec la porte (2) et qui transmet un mouvement de réglage de l'entraînement pivotant (10) sur la porte (2);
**caractérisé en ce que**
- l'un (L1B) des deux points d'appui (L1a, L1B) d'au moins l'une (G1) des articulations côté porte (G1, G2) est conçu (L1B) sous la forme d'une ferrure d'appui pour entraînement pivotant (34) sur laquelle l'entraînement pivotant (10) est fixé.

2. Agencement de porte pour aéronef selon la revendication 1,
**caractérisé en ce que**
la ferrure d'appui pour entraînement pivotant (34) forme le point d'appui inférieur (L1B) de l'articulation supérieure (G1) des deux articulations (G1, G2), par rapport au sens de la hauteur (Y) du bras oscillant porteur (8).

3. Agencement de porte pour aéronef selon la revendication 1 ou 2,
**caractérisé en ce que**
la ferrure d'appui pour entraînement pivotant (34) forme le point d'appui supérieur (L2a) de l'articulation inférieure (G2) des deux articulations (G1, G2), par rapport au sens de la hauteur (Y) du bras oscillant porteur (8).

4. Agencement de porte pour aéronef selon l'une quelconque ou plusieurs des revendications précédentes,
**caractérisé en ce que**
la ferrure d'appui pour entraînement pivotant (34) est un élément séparé qui est fixé de façon amovible sur le bras oscillant porteur (8) par des moyens de fixation (38).

5. Agencement de porte pour aéronef selon l'une quelconque ou plusieurs des revendications précédentes,
**caractérisé en ce que**
la ferrure d'appui pour entraînement pivotant (34) est conçue intégralement avec le bras oscillant porteur (8).

6. Agencement de porte pour aéronef selon l'une quelconque ou plusieurs des revendications précédentes,
**caractérisé en ce que**
la ferrure d'appui pour entraînement pivotant (34) comporte une section d'appui (46) qui forme l'un des points d'appui (L1B).

7. Agencement de porte pour aéronef selon l'une quelconque ou plusieurs des revendications précédentes,
**caractérisé en ce que**
la ferrure d'appui pour entraînement pivotant (34) comporte une section de fixation pour entraînement pivotant (40) qui s'étend sensiblement à la perpendiculaire de l'axe de pivotement côté porte (AD), qui peut être reliée avec une section frontale (44) de l'entraînement pivotant (10).

8. Agencement de porte pour aéronef selon l'une quelconque ou plusieurs des revendications précédentes,
**caractérisé en ce que**
la ferrure d'appui pour entraînement pivotant (34) comporte une section de fixation pour bras oscillant porteur (36).

9. Agencement de porte pour aéronef selon l'une quelconque ou plusieurs des revendications précédentes,
**caractérisé en ce que**
l'entraînement pivotant (10) comporte un axe de sortie qui est aligné sur l'axe de pivotement côté porte (AD) du bras oscillant porteur (8).

10. Agencement de porte pour aéronef selon l'une quelconque ou plusieurs des revendications précédentes,
**caractérisé en ce que**
l'entraînement pivotant (10) est disposé dans l'axe de pivotement côté porte (AD) et entre les deux articulations (G1, G2).

11. Agencement de porte pour aéronef selon l'une quelconque ou plusieurs des revendications précédentes,
**caractérisé en ce que**
- l'entraînement pivotant (10) comporte un arbre de sortie creux (54) dans lequel un pivot (56) qui s'étend à travers le premier point d'appui (L1a) et dans 1a ferrure d'appui pour entraînement pivotant (34) s'accroche de façon solidaire en rotation et
- l'élément de sortie (12 ; 14; 16) est relié la façon solidaire en rotation avec le pivot (56).

12. Agencement de porte pour aéronef selon l'une quelconque ou plusieurs des revendications précédentes,
**caractérisé en ce qu'**un élément d'appui (60) de l'entraînement pivotant (10) fixé sur la ferrure d'appui pour entraînement pivotant (34) forme l'un des points d'appui (L1B).

13. Agencement de porte pour aéronef selon l'une quelconque ou plusieurs des revendications précédentes,
**caractérisé en ce qu'**un arbre de sortie de l'entraînement pivotant (10) forme un pivot de l'articulation (G1 ; G2) sur laquelle on a prévu la ferrure d'appui pour entraînement pivotant (34) et **en ce que** l'élément de sortie (12 ; 14 ; 16) est relié de façon solidaire en rotation avec l'arbre de sortie formant le pivot (56).

14. Agencement de porte pour aéronef selon l'une quelconque ou plusieurs des revendications précédentes,
**caractérisé en ce que** l'élément de sortie (12 ; 14; 16) s'accroche sur le bras oscillant porteur (8) entre l'un des points d'appui (L1a) et la ferrure d'appui pour entraînement pivotant (34).

15. Agencement de porte pour aéronef selon l'une quelconque ou plusieurs des revendications précédentes,
**caractérisé en ce que** la porte (2) est une porte pour passagers.
